# EUROPÄISCHE PATENTSCHRIFT

(11) **EP 2 282 693 B1**
(45) Veröffentlichungstag und Bekanntmachung des Hinweises auf die Patenterteilung: **31.08.2016**
(21) Anmeldenummer: 09725163.1
(22) Anmeldetag: 26.03.2009
(51) Int. Cl.: A61C 7/00, A61C 7/08, A61C 19/045

(54) **VERFAHREN ZUR HERSTELLUNG EINER AUFBISS-SCHIENE**
METHOD FOR MANUFACTURING A BITE GUARD
PROCÉDÉ DE PRODUCTION D'UNE GOUTTIÈRE OCCLUSALE

(30) Priorität: 27.03.2008 DE 102008016548; 11.09.2008 DE 102008046708
(43) Veröffentlichungstag der Anmeldung: 16.02.2011
(73) Patentinhaber: Tridenta Dentaltechnik Gmbh, 10407 Berlin (DE)
(72) Erfinder: JASPER, Frank, 10318 Berlin (DE); ILMER, Viola, 10367 Berlin (DE)
(74) Vertreter: Elbel, Michaela
(86) Internationale Anmeldenummer: PCT/EP2009/053618
(87) Internationale Veröffentlichungsnummer: WO 2009/118391

(56) Entgegenhaltungen:
- WO-A-03/101330
- WO-A-2006/015809
- DE-U1-202004 020 196

## Beschreibung

### Gebiet der Erfindung

Die vorliegende Erfindung betrifft das technische Gebiet der Zahnmedizin sowie das technische Gebiet der Diagnose und Therapie von Fehlstellungen des menschlichen Unterkiefers und von Mitteln zur Korrektur von Fehlstellungen. Insbesondere betrifft die Erfindung ein Verfahren zum Herstellen einer Aufbiss-Schiene zum Positionieren eines Unterkiefers.

### Hintergrund der Erfindung

Der menschliche Unterkiefer ist durch das Kiefergelenk und ein komplexes System aus Muskeln und Bändern am Schläfenbein unterhalb des Oberkiefers aufgehängt, wodurch sich die Lage des Kiefergelenks und die Okklusion, d.h. der Schlussbiss der Zähne des Ober- und Unterkiefers, gegenseitig beeinflussen. Wichtig ist dabei ein ausgewogenes Zusammenspiel von Zähnen, Muskulatur und Kiefergelenk. Die ideale Okklusion besteht, wenn die Zähne in einer physiologischen Position zueinander stehen und der Kiefer dabei seine angeborene Lage behalten kann. Stehen die Zähne in einer unphysiologischen Position, verschiebt sich der Unterkiefer beim Schließen automatisch in eine abnorme Lage, um die Fehlstellung der Zähne auszugleichen. Daraus resultiert der Zustand der sog. Malokklusion. Diese Fehlstellung kann z.B. durch eine falsche kieferorthopädische Behandlung, schlechten Zahnersatz oder eine angeborene Zahnfehlstellung hervorgerufen werden. Durch die Malokklusion wird ein unphysiologischer Druck auf die Kiefergelenke und die umliegenden Muskeln ausgeübt, sodass diese übermäßig belastet werden. Daraus können Symptome, wie Kiefergelenksbeschwerden, eine eingeschränkte Mundöffnung oder sekundäre Zahnfehlstellungen resultieren. Kiefergelenksbeschwerden können sich ferner direkt aus einem arthropathisch oder degenerativ veränderte Kiefergelenk oder einer angeborenen Kieferfehlstellungen ergeben. Ebenso können psychoemotionale Faktoren, Stress, neurologische Erkrankungen oder orthopädische Fehlstellungen alleinige Ursachen für Okklusionsstörungen sein. Summationseffekte dieser Faktoren zusammen mit Störungen im Bereich der Kiefer führen zu einer deutlichen Erhöhung des Erkrankungsrisikos.

Eine Vorrichtung zur Okklusions-Korrektur ist aus der WO 03/101330 A2 bekannt.

Okklusale und kaufunktionelle Störungen können jedoch nicht nur für Kiefergelenksbeschwerden sondern ebenso für Kopf- und Gesichtsschmerzen, Sprachprobleme sowie Schlaf- und Gleichgewichtsstörungen, Tinnitus und Sehstörungen ursächlich sein. Ebenso können Probleme im Bereich der Wirbelsäule und der Bandscheiben sowie des Bewegungsapparates, z.B. der Hüfte, des Knies und des Schulterbereichs durch kaufunktionelle Störungen hervorgerufen werden. Ohne zahnmedizinische Abklärung werden diese Beschwerden nur symptomatisch, anstatt ursächlich behandelt, was die Heilungschancen drastisch reduziert. Eine diagnostisch-therapeutische zahnmedizinische Nachuntersuchung von Patienten, bei denen zuvor eine Trigeminusneuralgie diagnostiziert wurde, zeigte dass in bis zu 50 % der Fälle Okklusionsstörungen die eigentlichen Ursachen der neuralgischen Symptomatik waren (Lotzmann et al., 1994). Anhand epidemiologischer Daten konnten Zusammenhänge zwischen einem Auftreten von Kopfschmerzen und Verspannungen der Kaumuskulatur nachweisen werden (Bernhardt et al., 2005). Deshalb ist zur Abklärung insbesondere von Spannungskopfschmerz, Migräne und Trigeminusneuralgie im Rahmen der interdisziplinären Diagnostik auch eine Überprüfung zahnmedizinischer Ursachen erforderlich.

Zur instrumentellen Funktionsdiagnose des Kiefergelenks kann eine Registrierung der Kondylenbahnen durch optoelektronische, elektromechanische, magnetische oder Ultraschall-Systeme durchgeführt werden. Im US Patent 4,234,306 und in der DE 10 2004 038 545 A1 werden Systeme zum Aufzeichnen von Kieferpositionen, Kondylenbahnen und zur instrumentellen Funktionsanalyse beschrieben, wobei die Kieferpositionen durch Markierungen widergespiegelt und durch optische Hilfsmittel detektiert werden. Diese Daten werden auf ein Gerät zur Simulation von Kiefergelenksbewegungen, auch Artikulator genannt, übertragen. Ein kommerziell erhältliches optoelektronischen Meßsystems ist das String Condylocomp LR3 (DENTRON GmbH Dentale Mess- und Informationssysteme, Höchberg), bei dem mehrere Lichtquellen und Lichtsensoren am Oberkiefer befestigt und gegenüber mehreren mit dem Unterkiefer verbundenen Reflektorplatten positioniert werden. Der Abstand dieser Reflektorplatten ändert sich bei Bewegungen des Unterkiefers, wodurch sich die von den Lichtsensoren empfangene Lichtmenge ebenfalls proportional ändert.

Bei elektromechanischen Meßsystemen wird die Kieferbewegung aufgezeichnet, indem z.B. ein oder mehrere Schreibstifte auf einer Widerstandsfolie gleiten. Diese Widerstandsfolie befindet sich lateral beider Kiefergelenke. Anhand des elektrischen Widerstandes zwischen diesen Schreibstiften und der an den Kanten angebrachten Elektroden kann ein angeschlossener Computer die momentane räumliche Position der Schreibstifte errechnen. In Bernhardt et al. (2003) werden Kondylenachsen und Kiefergelenksbewegungen durch die elektromechanischen Systeme Cadiax Compact und Gamma Cadiax detektiert und zur Kiefergelenksdiagnostik sowie zum Justieren eines Artikulators verwendet. Durch die derartige mechanische Übertragung der Bewegungsdaten ergeben sich Messungenauigkeiten. Zudem wird bei diesen Systemen nicht die räumliche Position des Unterkiefers und dessen Relation zum Oberkiefer erfasst, sondern nur die Bewegungen des Unterkiefers.

Bei magnetischen Meßsystemen wird ein Magnet am Unterkiefer befestigt, und das entstehende Magnetfeld wird durch mehrere am Oberkiefer befestigte Spulen gemessen. Das Magnetfeld ändert sich bei Bewegungen des Unterkiefers, sodass ein an die Spulen angeschlossener Computer die Position des Unterkiefers ermitteln kann. Magnetische Systeme sind jedoch gegenüber im Raum vorhandene Magnetfelder störungsanfällig. Zudem wird der Unterkiefer bei diesen Systemen nicht in seiner vollständigen räumlichen Position erfasst, sondern es werden nur drei Freiheitsgrade gemessen.

Bei Ultraschall-Systemen, wie dem Jaw Motion Analyzer JMA (Zebris Medizintechnik GmbH, Isny) oder dem Ultraschall-Registriersystem USR (Prototyp, Edinger, Hamburg), werden an Ober- und Unterkiefer mehrere Ultraschall-Sender und Empfänger befestigt. Bei Kieferbewegungen verändert sich der Abstand zwischen Sendern und Empfängern, wodurch sich die Laufzeit eines Ultraschall-Signals ändert. Ein angeschlossenes Auswertungssystem kann aus den Laufzeiten die Position des Unterkiefers errechnen. Die Ultraschall-Signale sind jedoch gegenüber Raumgeräuschen sehr störungsanfällig, und die Ultraschall-Laufzeit ist von Faktoren, wie Raumtemperatur und Luftfeuchtigkeit abhängig.

Die genannten Mess-Systeme ermöglichen die grafische Darstellung der Unterkieferbewegungen, sodass in verschiedenen Ansichten die Kondylenbahnen beurteilt, vermessen und Bewegungen dreidimensional simuliert werden können. Durch Geräte zur Wiedergabe von Kieferbewegungen, wie das Robotersystem Rosy (Teconsult Precision Robotics, Hamburg), kann durch Schrittmotore gesteuert zudem eine therapeutische Unterkieferposition aufgesucht werden. Diese Position ist auf dem Bildschirm in allen Raumebenen im Verhältnis zur aufgezeichneten Kondylenbahn erkennbar. So kann zum Beispiel eine anteriore Kieferposition mit einer zusätzlichen Distraktion aufgesucht werden.

Als weiteres Diagnoseverfahren ist die Magnet Resonanz Tomographie (MRT) geeignet, die ein klares Bild der individuellen Anatomie des Kiefergelenks sowie der Position der verschiedenen bindegewebsartigen Stützstrukturen, wie Diskus und Bandapparat, innerhalb des Kiefergelenks liefert.

Keines der oben genannten Verfahren ermöglicht es jedoch aus der bildlich dargestellten Anatomie eines Kiefergelenks eine individuelle Aufbiss-Schiene herzustellen, welche die Fehlstellung des Unterkiefers korrigiert. Durch die oben geschilderte vielfältige primäre und sekundäre Symptomatik von Unterkiefer-Fehlstellung und Malokklusion besteht jedoch ein hoher Bedarf nach Aufbiss-Schienen, die Fehlstellungen korrigieren.

Es ist deshalb die Aufgabe der vorliegenden Erfindung ein Verfahren zum Herstellen einer Aufbiss-Schiene zum Positionieren des Unterkiefers bereitzustellen, wodurch eine individuelle, korrigierende Aufbiss-Schiene kostengünstig und mit geringem Aufwand für den Zahntechniker sowie den Patienten hergestellt wird.

Diese Aufgabe wird durch die erfindungsgemäße Herstellung einer Aufbiss-Schiene gemäß Anspruch 1 gelöst.

Im erfindungsgemäßen Verfahren wird die Anatomie eines Kiefergelenks bildgebend dargestellt. Aus dieser bildgebenden Darstellung wird mit Hilfe einer Referenzmarkierung eine Fehlposition berechnet, um anhand der berechneten Daten eine individuelle, korrigierende Aufbiss-Schiene herzustellen.

### Zusammenfassung der Erfindung

Die vorliegende Erfindung betrifft ein Verfahren zum Herstellen einer Aufbiss-Schiene zum Positionieren eines Unterkiefers, umfassend die Schritte:
a) Bereitstellen einer Schablone 1, die eine Impression eines Unterkiefers 25 und eine Impression eines Oberkiefers 20 eines Patienten aufweist;
b) Befestigen mindestens einer Referenzmarkierung 5, die eine mechanische Referenzebene definiert, an der Schablone 1;
c) Positionieren der Schablone 1 im Mundraum des Patienten, sodass ein Schlussbiss der Kiefer 20, 25 erreicht wird;
d) bildgebendes Darstellen der Kiefer 20, 25 und der Referenzmarkierung 5 mit der positionierten Schablone 1;
e) Bestimmen einer optischen Referenzebene 30 durch die Referenzmarkierung 5 und Bestimmen von mindestens einem Ist-Wert in der bildgebenden Darstellung;
f) Analysieren einer Kleferstellung aus der bildgebenden Darstellung durch einen Vergleich des Ist-Werts mit mindestens einem Soll-Wert; und
g) Herstellen einer Aufbiss-Schiene, die den Unterkiefer 25 von einer Kieferstellung gemäß dem Ist-Wert in eine Kieferstellung gemäß dem Soll-Wert positioniert.

Offenbart ist eine Aufbiss-Schiene, erhalten durch ein Verfahren nach einem der Ansprüche.

Darüber hinaus ist eine Verwendung der erfindungsgemäß hergestellten Aufbiss-Schiene zur Behebung von Kieferfehlstellungen, Relaxierung der Kiefermuskulatur, Entlastung der Kiefergelenksstrukturen, Beseitigung okklusal bedingter Parafunktionen, Verbesserung von neuromuskulärer Koordination und/oder Schmerztherapie offenbart.

### Kurzbeschreibung der Figuren

Nachfolgend werden Ausführungsbeispiele des erfindungsgemäßen Verfahrens anhand der beigefügten schematischen Figuren exemplarisch erläutert.
Fig. 1A-E zeigt Ausführungsbeispiele einer Schablone 1 mit verschiedenen Referenzmarkierungen 5 in Aufsicht.
Fig. 2 zeigt einen menschlichen Oberkiefer 20 und Unterkiefer 25 mit positionierter Schablone 1 in Seitenansicht.
Fig. 3 zeigt eine bildgebende Darstellung eines menschlichen Gesichtsschädels mit im Oberkiefer 20 positionierter Schablone 1 und skizzierter Referenzebene 30 einschließlich der Parallelen der Referenzebene 30 sowie einen skizzierten Winkel 35 des Kiefergelenks.
Fig. 4 zeigt eine Vergrößerung des Kiefergelenks aus Fig. 3 mit einem Unterkieferköpfchen 40 und einem Gelenkgrübchen 45 im Oberkiefer 20.
Figur 5 bildet den Ober- und Unterkiefer sowie das Kiefergelenk mit eingesetzter Schablone inkl. Referenzmarkierungen sowie eingezeichneten Nullebenen ab.

### Detaillierte Beschreibung der Erfindung

Die vorliegende Erfindung betrifft zunächst ein Verfahren zum Herstellen einer Aufbiss-Schiene zum Positionieren eines Unterkiefers, umfassend die Schritte:
a) Bereitstellen einer Schablone 1, die eine Impression eines Unterkiefers 25 und eine Impression eines Oberkiefers 20 eines Patienten aufweist;
b) Befestigen mindestens einer Referenzmarkierung 5, die eine mechanische Referenzebene definiert, an der Schablone 1;
c) Positionieren der Schablone 1 im Mundraum des Patienten, sodass ein Schlussbiss der Kiefer 20, 25 erreicht wird;
d) bildgebendes Darstellen der Kiefer 20, 25 und der Referenzmarkierung 5 mit der positionierten Schablone 1;
e) Bestimmen einer optischen Referenzebene 30 durch die Referenzmarkierung 5 und Bestimmen von mindestens einem Ist-Wert in der bildgebenden Darstellung;
f) Analysieren einer Kieferstellung aus der bildgebenden Darstellung durch einen Vergleich des Ist-Werts mit mindestens einem Soll-Wert; und
g) Herstellen einer Aufbiss-Schiene, die den Unterkiefer 25 von einer Kieferstellung gemäß dem Ist-Wert in eine Kieferstellung gemäß dem Soll-Wert positioniert, aus den übertragenen Daten.

Der hier verwendete Begriff "Schablone" umfasst ein Abformmaterial, das einen gesamten oder partiellen Negativabdruck eines Ober- und/oder Unterkiefers, mindestens einer Zahnreihe oder mindestens eines Zahns aufweist. Dadurch ist die Schablone individuell auf den Patienten abgestimmt, von dessen Kiefer der Negativabdruck stammt. Die Schablone kann z.B. aus einem vorgeformten Rohling oder einem aushärtenden Material hergestellt werden.

Der hier verwendete Begriff "Impression" wird durch einen Negativabdruck, z.B. eines Zahnes oder Kiefers definiert, der in formbarem Material eine Vertiefung hinterlässt.

Der hier verwendete Begriff "Oberkiefer" bezeichnet einen paarigen Knochen des Gesichtsschädels, z.B. eines Menschen. Er bildet den Boden der Augenhöhle Orbita, den Boden und die Seitenwand der Nasenhöhle Cavum nasi sowie den Gaumen und damit das Dach der Mundhöhle Cavum oris proprium. Der Oberkiefer enthält auch die Kieferhöhle Sinus maxillari. Der Begriff "Oberkiefer" umfasst hier ebenso das Schläfenbein und das Gelenkgrübchen des Schläfenbeins Fossa mandibularis.

Der hier verwendete Begriff "Unterkiefer" ist ein weiterer Knochen des Gesichtsschädels, der einen hufeisenförmigen Unterkieferkörper Corpus mandibulae und beiderseits einen aufsteigenden Unterkieferast Ramus mandibulae umfasst. Ferner umfasst er einen Muskelfortsatz Processus coronoideus mit dem Musculus temporalis und dem Gelenkfortsatz Processus condylaris mit dem Unterkieferköpfchen Caput mandibulae, der mit dem Oberkiefer das Kiefergelenk bildet.

Der hier verwendete Begriff "Referenzmarkierung" bezeichnet eine Kalibrierungsvorrichtung, welche anatomische Objekte eines realen Gesichtsschädels mit einer bildlichen Darstellung derselben Objekte in räumliche Relation setzt. Dadurch können den bildlichen Objekten Proportionen zueinander und absolute Größen aus dem realen Bild zugeordnet werden, d.h. die bildliche Darstellung kann kalibriert werden. Die Referenzmarkierung spannt ein Bezugssystem auf, das die realen anatomischen Daten des Gesichtsschädels mit einem bildlichen Datensatz in Deckung bringt. Darüber hinaus werden durch die Referenzmarkierung die kalibrierten Daten aus der bildlichen Darstellung in eine definierte geometrische Beziehung zu anderen Schnittstellen gebracht, wie einem virtuellen oder mechanischen Artikulator, der die Kieferbewegungen simuliert und das Einjustieren der Kiefer zueinander ermöglicht.

Der hier verwendete Begriff "Referenzebene" umfasst einen zweidimensionalen Vektor der als zweidimensionales Bezugsobjekt das Bezugssystem aufspannt. Die Referenzebene resultiert aus der Lage der Referenzmarkierungen oder der Lage mindestens zweier anatomischer Referenzpunkte. Im Gegensatz zu anatomischen Referenzpunkten ist die Reproduzierbarkeit von Referenzmarkierungen höher. Als "mechanische Referenzebene" wird eine Ebene im realen Gesichtschädel eines Patienten bezeichnet. Als "optische Referenzebene" wird eine virtuelle Ebene in der bildlichen Darstellung des Gesichtsschädels bezeichnet, die der mechanischen Referenzebene im realen Gesichtsschädel entspricht. Beispiele von Referenzebenen sind funktionelle Bisslagen und andere Okklusalebenen, wie die Frankfurter Ebene, HIP-Ebene, Camper'sche Ebene; Ebenen durch arbiträre Referenzpunkte, wie Gesichtsbogen, Bipupillarlinie, externe Gehörgänge, und andere Schädelebenen.

Der hier verwendete Begriff "Schlussbiss", auch Okklusion genannt, bezeichnet den Endpunkt der Kieferschlussbewegung mit maximalem Vielpunktkontakt der Zähne mit den gegenüberliegenden Zähnen oder dem Material, auf das die Zähne beißen. Idealerweise sollten im Schlussbiss beide Gelenkköpfchen zentral im jeweiligen Gelenkgrübchen sitzen. Dabei sollten das linke und rechte Kiefergelenk symmetrisch zueinander stehen, die Kaumuskulatur auf beiden Seiten dieselbe Spannung und Länge aufweisen und die Zahnreihen im Seitenzahngebiet rechts und links gleichmäßige Vielpunktkontakte zeigen. Diese Parameter werden unbewusst, z.B. beim Schlucken vom Gehirn überprüft. Falls Asymmetrien vorliegen, setzt ein unwillkürlicher Kompensationsmechanismus ein, sodass die Person den Unterkiefer verschiebt bis sie wieder beiderseits Vielpunktkontakte an den Zähnen spürt. Allerdings geht dabei die Symmetrie und die beidseitig gleichmäßige Spannung der Muskulatur verloren, was z.B. zu Bruxismus und kraniomandibulären Dysfunktionen führt.

Der hier verwendete Begriff "bildgebendes Darstellen" bezeichnet jegliche bildliche Wiedergabe eines realen Objektes in zwei bis vier Dimensionen, z.B. durch x-, y-, z- und Zeit-Koordinaten. Bildgebendes Darstellen umfasst z.B. 3-dimensionale Volumentomographie und/oder Oberflächenrasterung durch Auflichtscannen. Die Bilddaten können sowohl analog als auch digital wiedergegeben werden, z.B. durch individuelle oder kommerziell erhältliche Computer-Programme, wie z.B. DiCom (OFFIS e. V., Oldenburg, Deutschland). Der Begriff "bildgebendes Darstellen" umfasst auch ein Übereinanderlagern und Bearbeiten von Bilddaten, z.B. mittels Computer-Programmen, wie coDiagnostiX® (Chemnitz, Deutschland) oder implant3D (med3D GmbH, Heidelberg, Deutschland). Aus den Bilddaten lassen sich Ist-Werte als Koordinaten, Längen-, Volumen- und Winkelmaße abmessen.

Der hier verwendete Begriff "Ist-Wert" bezeichnet einen gemessenen oder vorliegenden Wert, der die Anatomie eines Gesichtsschädels, insbesondere der Kiefer und der Kiefergelenk definiert. Der hier verwendete Begriff "Soll-Wert" bezeichnet einen erwünschten Wert der Anatomie des Gesichtsschädels, der z.B. dem physiologischen Zustand entspricht. Soll-Werte können individuelle Werte, die anhand der Anatomie des Patienten ermittelt werden, oder Literaturwerte sein.

Der hier verwendete Begriff "Kieferstellung" bezeichnet eine Stellung des Unterkiefers und Oberkiefers zueinander, wobei sowohl physiologische als auch pathologische Kieferstellungen umfasst werden. Pathologische Kieferstellungen können primär auftreten oder sekundär durch andere Störungen bedingt sein, wie z.B. eine Fehlstellung der Zähne.

Der hier verwendete Begriff "Aufbiss-Schiene" bezeichnet ein Mittel zum Aufbeißen für den Unterkiefer und/oder Oberkiefer, der eine individuelle Vorrichtung in Form eines Abdruckes aufweist. Umfasst werden sowohl Okklusionsschienen, wie Äquilibrierungsschienen, Repositionsschienen, Vertikalisationsschienen, Dekompressionsschienen und Protrusionsschienen; sowie Reflexschienen, z.B. mit beidseitigem Aufbiss oder anteriorem Aufbiss.

Um für das erfindungsgemäße Verfahren die Schablone bereitzustellen, wurde z.B. zunächst ein Modell des Oberkiefers und Unterkiefers hergestellt, wobei ein Abdruck vom Gebiss des Oberkiefers und Unterkiefers genommen wurde. Dieser Abdruck wurde mit Superhartgips oder einem anderen geeigneten Materialien ausgegossen. Diese Oberkiefer- und Unterkiefer-Modelle wurden in einem Artikulator schädelbezüglich und horizontal zum Erdmittelpunkt justiert, d.h. artikuliert, und zueinander in Biss-Lage gebracht. Zwischen das Oberkiefer- und das Unterkiefer-Modell wurde lagerichtig ein Rohling einer Schablone aritiert, in den der Oberkiefer sowie der Unterkiefer eingeschliffen wurden. Insbesondere wurden die Zähne und deren Impressionen in den Rohling eingeschliffen, sodass mit der geschliffenen Schablone ein maximaler Schlussbiss erreicht wurde.

Über das hergestellte Oberkiefer- oder Unterkiefer-Modell kann statt des Einschleifens z.B. mittels eines Tiefziehgeräts und Vakuum eine Folie gezogen werden. Die gezogene Folie wird als Schablone herausgeschnitten und nachbearbeitet, z.B. werden die Impressionen der Zähne des Kiefers, über den der Rohling gezogen wurde, nachgeschliffen, und die Impressionen des Gegenkiefers werden eingearbeitet.

Die Schablone kann auch direkt hergestellt werden, indem dem Patienten gleichzeitig ein Abdruck des Unterkiefers und des Oberkiefers mittels eines aushärtenden Materials abgenommen wird. Dieses Verfahren bietet den Vorteil, dass innerhalb einer Sitzung beim Zahnarzt bzw. beim Kieferorthopäden die Schablone hergestellt werden kann, mit der Referenzmarkierung versehen wird und der Kiefer eines Patienten bildgebend dargestellt wird.

Die Referenzmarkierung kann sowohl bevor als auch nachdem die Oberkiefer- und Unterkiefer-Impression in die Schablone eingearbeitet wird/wurde an der Schablone befestigt werden. Vorzugsweise wird sie nachträglich an der Schablone befestigt, da sie dann das Einarbeiten der Impressionen in die Schablone nicht behindert, nicht abgelöst werden kann und zu keinen Vergiftungserscheinungen führt, z.B. bei einer oralen oder dermalen Aufnahme durch den Patienten aus dem aushärtenden Material.

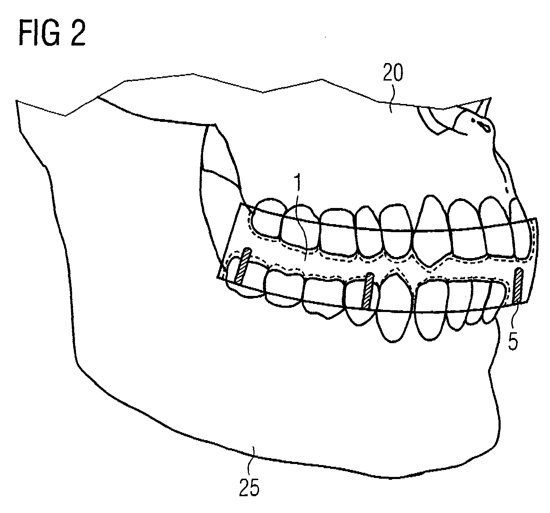

Die individuelle Schablone mit Referenzmarkierung wird so im Mundraum des Patienten positioniert, dass ein Schlussbiss der Kiefer erreicht wird (Fig. 2).

Anschließend werden der Kiefer und die positionierte Schablone mit der Referenzmarkierung bildgebend dargestellt. Bei der bildgebenden Darstellung können sowohl Oberflächen- als auch Volumendaten des Schädels inkl. der Zähne des Patienten erfasst werden. Vorzugsweise werden die Oberflächen der Zähne durch ein Auflichtscannen abgetastet, wodurch eine höhere Auflösung erzielt wird. Die erfassten Daten können in einer Gesamtdarstellung zusammengeführt werden, wie z.B. durch ein Übereinanderlagern von Bilddaten. Daten für die bildgebende Darstellung, wie z.B. Daten der Zahnoberflächen, können auch aus Kiefermodellen, Abdrücken oder der Schablone gewonnen werden.

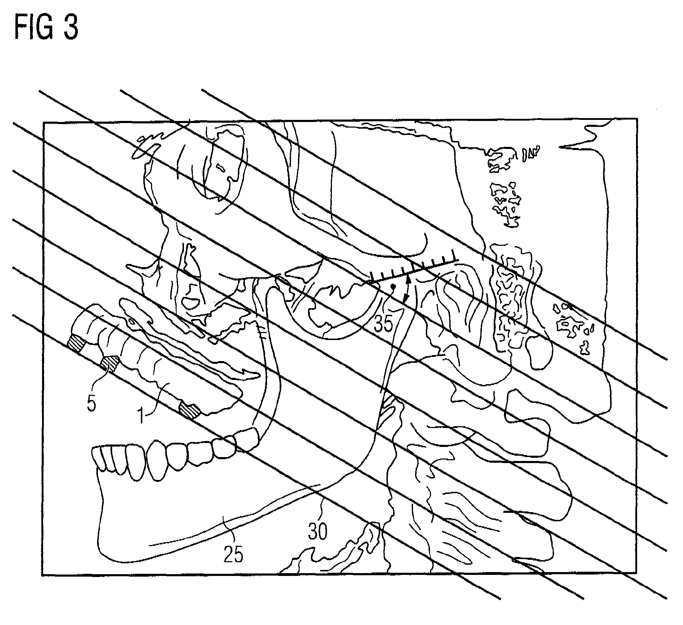

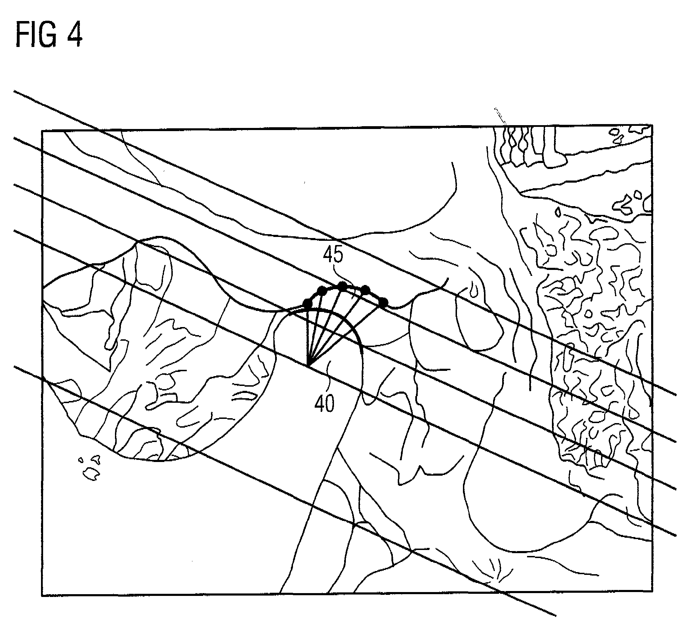

Anhand der Referenzmarkierung wird eine optische Referenzebene bestimmt, die sich als Raster und Bezugssystem hochrechnen lässt und sich über den ganzen Schädel zieht (Fig. 3). Weitere Bezugspunkte des Rasters können neben der Referenzmarkierung anatomische Fixpunkte sein. Fehlstellungen der Zähne, der Kiefer und des Kiefergelenks werden durch die bildgebende Darstellung sichtbar und lassen sich durch das Bezugssystem quantifizieren. Ist-Werte bezüglich der Parallelität von Gelenkgrübchen und Gelenkhöckerchen, der Stellung des Unterkiefers, der Biss-Lage oder des Winkels zwischen der Referenzebene und einer Sekante oder Tangente, die an das Gelenkgrübchen des Oberkiefers angelegt wird (Fig. 4), lassen sich aus der bildgebenden Darstellung mittels des Rasters quantitativ bestimmen. Soll-Werte werden aus der Literatur oder aus der bildgebenden Darstellung bezogen und mit den Ist-Werten verglichen, um ein Maß einer Abweichung des Ist-Zustandes vom Soll-Zustand und damit eine Maß einer therapeutischen Repositionierung in den optimalen Soll-Zustand zu bestimmen.

Die aus einer Analyse von Soll- und Ist-Wert gewonnenen Maße der Abweichung werden auf einen virtuellen oder mechanischen Artikulator lagerichtig übertragen und/oder mit der Schablone verrechnet, sodass eine Aufbiss-Schiene hergestellt wird, die den Kiefer in seine optimale Lage repositioniert. Ein virtueller Artikulator ist mit einer Software gleichzusetzen, die 3-dimensionale Daten verarbeitet.

Durch die erfindungsgemäß hergestellte Aufbiss-Schiene werden Fehlstellungen des Kiefergelenks effektiv, einfach und kostengünstig behoben. Eine Therapie durch eine Aufbiss-Schiene genießt bei Patienten im Gegensatz zu schmerzhaften und teuren kieferchirurgische Eingriffen eine hohe Akzeptanz. Folgebeschwerden der Fehlstellungen des Kiefergelenks, wie degenerative Veränderungen des Kiefergelenks, Kiefer-, Kopf- und Gesichtsschmerzen, insbesondere Migräne und Spannungskopfschmerz, Probleme im gesamten Bereich der Wirbelsäule und des Bewegungsapparates, Sprachprobleme, Schlaf- und Gleichgewichtsstörungen, Tinnitus, Sehstörungen und Trigeminusneuralgien können durch das Tragen einer erfindungsgemäß hergestellten Aufbiss-Schiene kausal therapiert werden. Zudem können muskuläre Hypertonizitäten abgebaut werden und Schädigungen des Kauapparates durch Bruxismus, psychogene Faktoren und primäre orthopädische Erkrankungen verhindert werden. Bereits Muskelverspannungen, die noch nicht zu pathologischen Veränderungen geführt haben, können durch die erfindungsgemäß hergestellte Aufbiss-Schiene behoben werden.

Durch die direkte Darstellung des realen Kiefergelenks mittels bildgebender Verfahren werden verfälschende Faktoren, wie z.B. bei Kiefermodellen oder der mechanischen, optoelektronischen, magnetischen oder Ultraschall-Datenübertragung vermieden. Auch wird der Unterkiefer oder das Kiefergelenk nicht aus seinem physiologischen System isoliert, sondern der gesamte Kauapparat inklusive Muskeltonus, Sehnen, Bandapparat und neurologischer Innervation werden eingebettet in den Gesichtsschädel abgebildet. Durch die Verwendung detailgetreuer bildgebender Verfahren wird die Genauigkeit und Sensibilität des erfindungsgemäßen Verfahrens weiter gesteigert, was insbesondere im Dentalbereich wichtig ist, da die Okklusion vom Körper so fein eingestellt ist, dass bereits eine Folie von 10 µm Stärke ertastet werden kann (Meyer, 1997).

Die erfindungsgemäß hergestellte Aufbiss-Schiene ist eine individuell angepasste Schiene, die den Unterkiefer genau um das Maß repositioniert, um das es bei dem speziellen Patienten von der optimalen Position abweicht.

In einer bevorzugten Ausführungsform der Erfindung ist die Impression des Unterkiefers eine okklusale Impression von mindestens einem Unterkieferzahn, und die Impression des Oberkiefers eine okklusale Impression von mindestens einem Oberkieferzahn. Durch den Abdruck der Zähne und deren komplexe Oberflächenstruktur erhält die Schablone eine hohe Passgenauigkeit im Mund des Patienten.

Der hier verwendete Begriff "okklusal" bezieht sich auf den einzelnen Zahn, die ganze Zahnreihe wie auch auf die Okklusionsfläche.

In einer besonders bevorzugten Ausführungsform weist die Referenzmarkierung mindestens drei Ortsvektoren auf, die miteinander verbunden eine virtuelle Ebene bilden. Der hier verwendete Begriff "Ortsvektor" bezeichnet einen Punkt, der durch seine räumlichen Koordinaten x, y und z definiert ist. Der hier verwendete Begriff "virtuelle Ebene" bezeichnet eine gedachte Ebene. Die Referenzmarkierung kann z.B. drei Elemente unterschiedlicher räumlicher Lage, eine nicht gerade Linie oder eine Fläche umfassen. Durch die virtuelle Ebene erfasst das Bezugssystem drei Dimensionen. d.h. die x- und y-Koordinaten der Ebene und die Lage der Ebene im Raum.

In einer anderen bevorzugten Ausführungsform umfasst die Referenzmarkierung mindestens drei Stifte. Die Stifte können beliebig geformt sein, z.B. als Zylinder oder Rechtecke, und asymmetrisch oder symmetrisch zueinander oder zu den Zahnreihen angeordnet sein. Sie werden an der Schablone angebracht oder in die Schablone eingelassen. Die Stifte können leicht an der Schablone befestigt werden, sind kostengünstig zu erwerben und lassen sich flexibel einsetzen.

In einer weiteren bevorzugten Ausführungsform ist die Referenzmarkierung eine auftragbare Substanz, z.B. eine Flüssigkeit, ein Lack oder eine Paste, die auf die Schablone aufgetragen wird. Auftragbare Substanzen sind leicht in der Handhabung und verbinden sich gut und stabil mit dem Werkstoff, auf den sie aufgetragen werden.

Weiter ist es bevorzugt, dass die Referenzmarkierung die Schablone durchdringt. Die Schablone wird aus einer für die bildgebende Darstellung opaken Substanz hergestellt, oder dem Material, aus dem die Schablone hergestellt wird, wird eine opake Substanz beigemischt. Dadurch kann sich die Referenzmarkierung nicht von der Schablone ablösen.

Die Referenzmarkierung weist in einer weiteren Ausführungsform der Erfindung eine U-Form auf. Die U-Form kann auch zu einer C- Form gedehnt werden. Die U-Form ist leicht formbar, spiegelt den Verlauf des Zahnbogens wider und lässt sich daher gut an der Schablone befestigen.

Besonders bevorzugt ist, dass die Referenzmarkierung bündig mit einer zum gegenüberliegenden Zahnbogen weisenden Seite der Schablone abschließt. Dies ist vorteilhaft für die Bestimmung der Referenzebene und die Berechnung der Kieferstellung. Zudem ist ein Zubeißen durch den Patienten beim Tragen der Schablone leicht möglich.

Weiter ist es bevorzugt, dass die Referenzmarkierung röntgen-opak ist. Der hier verwendete Begriff "röntgen-opak" definiert eine hohe Undurchlässigkeit von Röntgenstrahlen. Somit lässt sich die Referenzmarkierung durch bildgebende Verfahren, die Röntgenstrahlen anwenden, klar und deutlich darstellen.

In einer alternativen Ausführungsform umfasst die Referenzmarkierung ein Metall, insbesondere einen metallhaltigen Lack. Metalle sind in vielen bildgebenden Verfahren sichtbar, sind als Metall-Lacke leicht auftragbar und verbinden sich stabil mit dem Material, auf das sie aufgetragen werden.

In einer weiteren bevorzugten Ausführungsform der Erfindung basiert das bildgebende Darstellen auf einem Verfahren, das aus der Gruppe ausgewählt ist, bestehend aus Röntgenverfahren, Kernspintomographie, Cone-Beam Technik, Computertomographie und digitaler Volumentomographie.

Der hier verwendete Begriff "Röntgenverfahren" bezeichnet einen Vorgang des Durchstrahlens mit Röntgenstrahlen oder anderen ionisierenden Strahlen sowie mittels eines fluoreszierenden Schirms oder eines Bildverstärkers. Die Bilder werden entweder auf geeignetem Filmmaterial, wie z.B. bei der Radiografie, auf Phosphorplatten oder mittels elektronischer Sensoren, wie Charged Coupled Devices (CCD) in der digitalen Radiografie sichtbar.

Der hier verwendete Begriff "Kernspintomographie", auch als Magnetresonanztomographie (MRT) bezeichnet, beruht auf sehr starken Magnetfeldern sowie elektromagnetischen Wechselfeldern im Radiofrequenzbereich, mit denen bestimmte Atomkerne im Körper angeregt werden. Umfasst sind offene und geschlossene MRT, MRT mit Kontrastmittel, Magnetresonanzangiographie, dynamische MRT, Perfusions-MRT, Diffusions-MRT und Diffusions-Tensor-Bildgebung sowie die funktionelle Magnetresonanztomographie.

Die hier verwendeten Begriffe "Computertomographie" (CT) und "digitale Volumentomographie" (DVT) bezeichnen die Auswertung einer Vielzahl aus verschiedenen Richtungen aufgenommener Röntgenaufnahmen eines Objektes mit Hilfe digitaler Datenverarbeitung, um ein dreidimensionales Bild zu erzeugen. Eine DVT erzeugt zur Berechnung dreidimensionaler Strukturen zweidimensionale Bilder, während die Bildgebung einer CT auf einer eindimensionalen Detektion basiert. Bezüglich der Strahlenexposition liegt die DVT deutlich unter der einer konventionellen CT, wie einer Spiral-CT. Eine DVT zeigt zudem weniger Artefakte durch metallische Restaurationen im Kieferbereich als eine CT.

Der hier verwendete Begriff "Cone Beam Technik" bezeichnet ein Verfahren, das zweidimensionale Projektionsdaten mit Hilfe eines Kegel-Strahls erzeugt. Als Detektor wird eine CCD Kamera verwendet, die auf einen Szintillator fokussiert ist, der Röntgenstrahlen in sichtbares Licht umwandelt.

Die bildgebenden Verfahren können vorzugsweise jeweils mit der Verwendung von Kontrastmitteln kombiniert werden.

In einer weiteren bevorzugten Ausführungsform der Erfindung bezieht/en sich der Soll-Wert und/oder der Ist-Wert auf die Kieferstellung, vorzugsweise die Unterkieferstellung. Der Unterkiefer ist mit dem Gehirnschädel über das Kiefergelenk beweglich verbunden und kann über das Kiefergelenk Rotations- und laterale sowie rostrocaudale Translationbewegungen (Gleitbewegung) durchführen. Durch die hohe Beweglichkeit und die Komplexität des Kiefergelenks ist die Lage des Unterkiefers ein kritischer und sensibler Parameter für z.B. arthropathische Störungen des Kiefergelenks. Werte, die sich auf die Kieferstellung beziehen sind u.a. der Kondylenbahnverlauf, die Kondylenbahnneigung relativ zu einem anatomischen Fixpunkt, wie der Nasenspitze, die Parallelität von Gelenkgrübchen und Gelenkhöckerchen, die Biss-Lage und der Winkel zwischen der Referenzebene und der Sekante oder Tangente, die an das Gelenkgrübchen des Oberkiefers angelegt ist.

In einer weiteren bevorzugten Ausführungsform der Erfindung wird eine relative Lage eines Unterkieferköpfchens und eines Gelenkgrübchens eines Schläfenbeins analysiert.

Der hier verwendete Begriff "Unterkieferköpfchen", auch als Caput mandibulae bezeichnet, umfasst zudem eine bewegliche Knorpelscheibe, den Diskus. Das Unterkieferköpfchen bildet mit dem Gelenkgrübchen ein Kiefergelenk. Der hier verwendete Begriff "Gelenkgrübchen" bezeichnet das Fossa mandibularis des Schläfenbeins. Das Gelenkgrübchen ist rostral durch das Tuberculum articulare und caudal durch den Processus retroarticularis begrenzt. Der hier verwendete Begriff "Kiefergelenk" umfasst das Unterkieferköpfchen, den Diskus, das Gelenkgrübchen, die Gelenkkapsel mit dem Gelenkknorpel, den Bindegewebsapparat, wie Sehnen und Bänder, und die ansetzende Muskulatur.

Durch die relative Lage des Unterkieferköpfchens zum Gelenkgrübchen können Fehlstellungen des Kiefergelenks diagnostiziert werden, die für kaufunktionelle Störungen und deren Folgen ursächlich sind.

In einer weiteren bevorzugten Ausführungsform der Erfindung werden die Daten aus der Analyse auf die Schablone übertragen, und die Schablone wird in der Herstellung der Aufbiss-Schiene verwendet. Dadurch ist kein Auflichtscannen der Zahnoberflächen erforderlich, da die Zahnoberflächendaten bereits mittels der Impressionen in der Schablone bereitgestellt werden.

Offenbart ist eine Aufbiss-Schiene, erhalten durch das erfindungsgemäße Verfahren.

Ferner ist die Verwendung der erfindungsgemäßen Aufbiss-Schiene zur Behebung von Kieferfehlstellungen, Relaxierung der Kiefermuskulatur, Entlastung der Kiefergelenksstrukturen, Beseitigung okklusal bedingter Parafunktionen, Verbesserung von neuromuskulärer Koordination und/oder Schmerztherapie offenbart.

Im funktionsgestörten Kauorgan kommt es primär oder sekundär zu einer Traumatisierung und Degeneration von knöchernem Gewebe im Bereich des Kiefergelenks. Hieraus resultieren ungleichförmige Unterkiefer-Bewegungen und vom normalen Verlauf abweichende Kondylenbahnen, die Ursache für kraniomandibuläre Dysfunktionen sind, wie z.B. Myopathien und Arthropathien.

Die Schienentherapie bewirkt eine Repositionierung des Kiefergelenks inklusive des Diskus, eine funktionelle Okklusion und ein Adaptieren der Kondylenposition, so dass Folgebeschwerden der Fehlstellungen des Kiefergelenks und kraniomandibulären Dysfunktionen, wie degenerative Veränderungen des Kiefergelenks, Kiefer-, Kopf- und Gesichtsschmerzen, insbesondere Migräne und Spannungskopfschmerz, Probleme, wie Verspannungen, im Bereich der Wirbelsäule und des Bewegungsapparates, wie der Hüfte, des Knies und des Schulterbereichs, Sprachprobleme, Schlaf- und Gleichgewichtsstörungen, Tinnitus, Sehstörungen und Trigeminusneuralgien durch das Tragen einer erfindungsgemäß hergestellten Aufbiss-Schiene therapiert werden. Zudem werden muskuläre Hypertonizitäten, neuromuskuläre Inkoordinationen und okklusal bedingte Parafunktionen abgebaut, komprimierte Gelenkstrukturen werden entlastet und Schädigungen des Kauapparates durch Bruxismus, psychogene Faktoren und primäre orthopädische Erkrankungen werden verhindert.

Ebenso können Muskelverspannungen behoben werden, die noch nicht zu pathologischen Veränderungen geführt haben.

### Detaillierte Beschreibung der konkreten Ausführungsformen anhand der Figuren

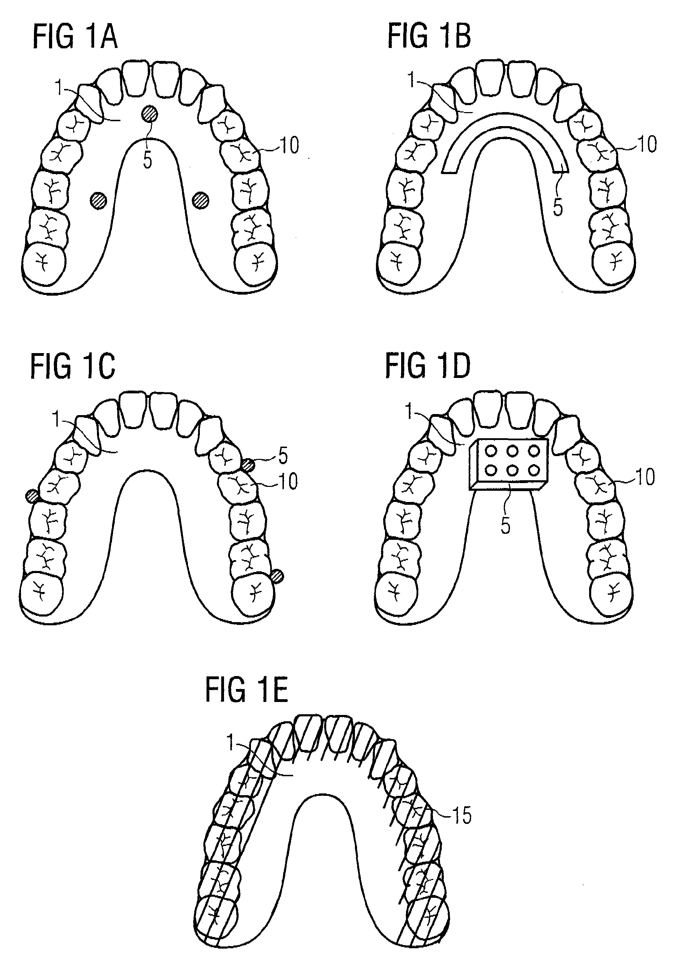

Die Figur 1A-E zeigt Ausführungsbeispiele einer Schablone 1 mit verschiedenen Referenzmarkierungen 5, die im erfindungsgemäßen Verfahren verwendet werden. Die Schablone 1 gibt eine okklusale Impression eines Oberkiefers wieder, welche eine okklusale Fläche 10 der Zähne umfasst.
In Figur 1A ist die Schablone 1 mit der Referenzmarkierung 5 zu sehen, die in Form von drei Stiften ausgebildet ist. Die Stifte sind an der Schablone 1 lingual zu den Zahnimpressionen angeordnet und liegen beim Tragen der Schablone 1 durch einen Patienten in dessen Mundhöhle. Ein Stift ist im Bereich der Inzisivi (Schneidezähne) angeordnet, die beiden anderen Stifte sind beidseitig im Bereich der Molaren (Mahlzähne) angeordnet.
In Figur 1B ist die Schablone 1 mit der Referenzmarkierung 5 zu sehen, die U-förmig ausgebildet ist. Sie ist lingual an der Schablone 1 im Bereich der Inzisivi, Canini (Eckzähne) und Prämolaren angeordnet.
In Figur 1C ist die Schablone 1 mit der Referenzmarkierung 5 zu sehen, die ebenfalls in Form von drei Stiften ausgebildet ist. Die Stifte sind lateral und bukkal an der Schablone 1 angeordnet und liegen beim Tragen der Schablone 1 durch einen Patienten in dessen Mundvorhof. Die Stifte weisen eine asymmetrische Verteilung bezüglich des Zahnbogens auf, wobei ein Stift im Bereich der Prämolaren, ein Stift im Bereich der Molaren und ein Stift im Bereich zwischen den Prämolaren und den Molaren angeordnet ist.
In Figur 1D ist die Schablone 1 mit der Referenzmarkierung 5 zu sehen, die als ein Klemmbaustein ausgebildet ist, der lingual an der Schablone 1 im Bereich des Zahnbogens angeordnet ist. Klemmbausteine eignen sich durch die hohe Genauigkeit ihrer Abmessungen besonders als Referenzmarkierung 5. Zudem kann der Klemmbaustein dazu dienen die Schablone 1 an einem Artikulator lagerichtig zu befestigen.
In Figur 1E ist die Schablone 1 mit der Referenzmarkierung 5 zu sehen, die als ein Bereich 15 ausgebildet ist, der mit einer röntgen-opaken Substanz beschichtet oder durchdrungen ist. Der Bereich 15 erstreckt sich über den gesamten Zahnbogen.
In Figur 2 ist ein bezahnter Oberkiefer 20 und ein bezahnter Unterkiefer 25 eines Menschen in Seitenansicht zu sehen. Zwischen den Zähnen des Oberkiefers 20 und des Unterkiefers 25 ist die Schablone 1 positioniert. Sie weist als Referenzmarkierungen 5 drei Stifte auf. In Figur 2 befinden sich der Oberkiefer 20 und der Unterkiefer 25 eines Patienten mit der Schablone 1 im Schlussbiss, sodass ein erfindungsgemäßes bildgebendes Darstellen des Kiefergelenks erfolgen kann.
Figur 3 zeigt eine bildgebende Darstellung eines menschlichen Gesichtsschädels in Seitenansicht. Der Gesichtsschädel weist ein Nasenbein, Augenhöhlen, einen Jochbogen und ein Schläfenbein sowie den Oberkiefer 20 und den Unterkiefer 25 auf. Ferner sind Teile der Schädelkalotte und der Halswirbelsäule dargestellt. Im Oberkiefer 20 ist die Schablone 1 positioniert. An der Schablone 1 sind als Referenzmarkierung 5 drei Stifte angebracht, die aus der Schablone 1 in Richtung Unterkiefer 25 herausragen. Der Oberkiefer 20 und der Unterkiefer 25 stehen anders als beim erfindungsgemäßen Verfahren nicht im Schlussbiss, sondern in einer offenen Position zueinander. Eine optische Referenzebene 30 wird durch eine Unterkante der Stifte gelegt, wodurch die Referenzebene 30 die Unterkanten der Stifte verbindet. Parallel zur Referenzebene 30 sind weitere Referenzebenen eingezeichnet, die den gesamten Gesichtschädel einschließlich des Kiefergelenks als Raster und Bezugssystem überziehen. Als Ist-Wert ist in Figur 3 ein Winkel 35 zwischen der Referenzebene 30 und einer Tangente an ein Gelenkgrübchen 45 im Oberkiefer eingezeichnet.
Figur 4 zeigt eine Vergrößerung des Kiefergelenks aus Figur 3 mit einem Gelenkköpfchen 40 des Unterkiefers und dem Gelenkgrübchen 45 des Oberkiefers. Die fünf Punkte in Figur 4 verdeutlichen die dorsale Begrenzung des Gelenkgrübchens 45. Die optimale Lage des Unterkieferköpfchens 40 befindet sich innerhalb des Gelenkgrübchens 45 in dessen rostralem Bereich mit dazwischen liegendem Diskus, sodass die Begrenzung des Unterkieferköpfchens 40 parallel zur Begrenzung des Gelenkgrübchens 45 verläuft. Eine Abweichung von dieser optimalen Lage des Unterkieferköpfchens 40 ist in Figur 4 zu sehen, angedeutet durch eine strahlenförmige Verbindung zwischen einem Zentralpunkt des Unterkieferköpfchens 40 und den begrenzenden Punkten des Gelenkgrübchens 45.

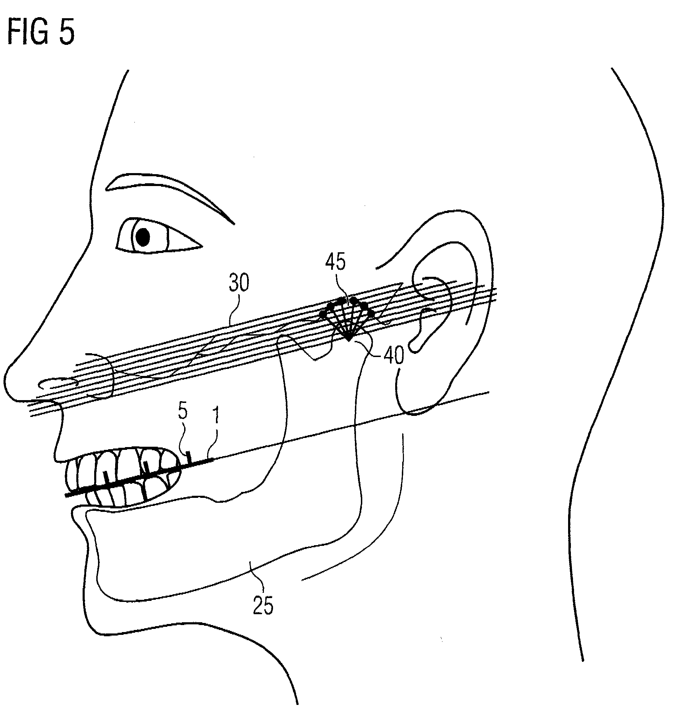

Figur 5 zeigt die Umrisse eines menschlichen Gesichtsschädels in Seitenansicht mit skizziertem Unterkiefer und angedeutetem Oberkiefer inkl. der Zähne. Ein Gelenkgrübchen 45 des Oberkiefers und ein Gelenkköpfchen 40 des Unterkiefers bilden zusammen das Kiefergelenk. Der geöffnete Mund gibt eine im Mundraum eingesetzte Schablone 1 frei, die sich mit den Zähnen im Schussbiss befindet. An der Schablone 1 sind drei Referenzmarkierungen 5 befestigt. Die Lage der Schablone 1 definiert die Lage der eingezeichneten optischen Referenzebenen 30, die sich als Bezugssystem über den Bereich des Kiefergelenks ziehen. Die relative Lage des Unterkieferköpfchens 40 zum Gelenkgrübchen 45 wird durch strahlenförmige Verbindungen zwischen einem Zentralpunkt des Unterkieferköpfchens 40 und den begrenzenden Punkten des Gelenkgrübchens 45 angedeutet. Die Punktsymmetrie und der Verlauf der strahlenförmigen Verbindungen sind Parameter für die Analyse der Kieferstellung.

### Bezugszeichenliste

- 1: - Schablone
- 5: - Referenzmarkierung
- 10: - okklusale Fläche von Zähnen
- 15: - röntgen-opaker Bereich
- 20: - Oberkiefer
- 25: - Unterkiefer
- 30: - optische Referenzebene
- 35: - Kiefergelenkswinkel
- 40: - Gelenkköpfchen des Unterkiefers
- 45: - Gelenkgrübchen des Oberkiefers

### Referenzen

Bernhardt et al., J Prosthet Dent 89(2), S. 175-179, 2003
Bernhardt et al., Quintessence Int 36(1), S. 55-64, 2005
Lotzmann et al., J Gnathol 13, S. 15-22, 1994
Meyer, Deutsches Ärzteblatt 94(40), 1997
US 4,234,306
DE 10 2004 038 545 A1

## Patentansprüche

1. Verfahren zum Herstellen einer Aufbiss-Schiene zum Positionieren eines Unterkiefers (25), zum Herstellen einer Aufbiss-Schiene umfassend die Schritte:
a) Bereitstellen einer Schablone (1), die eine Impression eines Unterkiefers (25) und eine Impression eines Oberkiefers (20) eines Patienten aufweist;
b) Befestigen mindestens einer Referenzmarkierung (5), die eine mechanische Referenzebene definiert, an der Schablone (1);
c) Positionieren der Schablone (1) im Mundraum des Patienten, sodass ein Schlussbiss der Kiefer (20; 25) erreicht wird;
d) bildgebendes Darstellen der Kiefer (20; 25) und der Referenzmarkierung (5) mit der positionierten Schablone (1);
e) Bestimmen einer optischen Referenzebene (30) durch die Referenzmarkierung (5) und Bestimmen von mindestens einem Ist-Wert in der bildgebenden Darstellung;
f) Analysieren einer Kieforstellung aus der bildgebenden Darstellung durch einen Vergleich des Ist-Werts mit mindestens einem Soll-Wert; und
g) Herstellen einer Aufbiss-Schiene, die den Unterkiefer (25) von einer Kieferstellung gemäß dem Ist-Wert in eine Kieferstellung gemäß dem Soll-Wert positioniert.

2. Verfahren nach Anspruch 1, wobei die Impression des Unterkiefers (25) eine okklusale Impression von mindestens einem Unterkieferzahn ist, und die Impression des Oberkiefers (20) eine okklusale Impression von mindestens einem Oberkieferzahn ist.

3. Verfahren nach Anspruch 1 oder 2, wobei die Referenzmarkierung (5) mindestens drei Ortsvektoren aufweist, die miteinander verbunden eine virtuelle Ebene bilden.

4. Verfahren nach einem der vorhergehenden Ansprüche, wobei die Referenzmarkierung (5) mindestens drei Stifte umfasst.

5. Verfahren nach einem der vorhergehenden Ansprüche, wobei die Referenzmarkierung (5) eine U-Form aufweist.

6. Verfahren nach einem der vorhergehenden Ansprüche, wobei die Referenzmarkierung (5) bündig mit einer zum gegenüberliegenden Zahnbogen weisenden Seite der Schablone (1) abschließt.

7. Verfahren nach einem der vorhergehenden Ansprüche, wobei die Referenzmarkierung (5) röntgen-opak (15) ist.

8. Verfahren nach einem der vorhergehenden Ansprüche, wobei das bildgebende Darstellen auf einem Verfahren basiert, das aus der Gruppe ausgewählt ist, bestehend aus Röntgenverfahren, Kernspintomographie, Cone-Beam Technik, Computertomographie und digitaler Volumentomographie.

9. Verfahren nach einem der vorhergehenden Ansprüche, wobei sich der Soll-Wert und/oder der Ist-Wert auf die Kieferstellung, vorzugsweise die Unterkieferstellung, bezieht/en.

10. Verfahren nach einem der vorhergehenden Ansprüche, wobei eine relative Lage eines Unterkieferköpfchens (40) und eines Gelenkgrübchens (45) eines Schläfenbeins analysiert wird.

11. Verfahren nach einem der vorhergehenden Ansprüche, wobei die Daten aus der Analyse auf die Schablone (1) übertragen werden und die Schablone (1) in der Herstellung der Aufbiss-Schiene verwendet wird.

## Claims

1. Method for producing a bite splint for positioning of a lower jaw (25), comprising the steps:
a) providing a template (1) which has an impression of a lower jaw (25) and an impression of an upper jaw (20) of a patient;
b) fixing at least one reference marking (5), which defines a mechanical reference plane, to the template (1);
c) positioning the template (1) in the patient's mouth so that occlusion of the jaws (20; 25) is achieved;
d) imaging the jaws (20; 25) and the reference marking (5) with the template (1) in position;
e) determining an optical reference plane (30) through the reference marking (5) and determining at least one actual value in the image;
f) analysing a jaw position from the image by comparing the actual value with at least one desired value; and
g) producing a bite splint which positions the lower jaw (25) from a jaw position according to the actual value into a jaw position according to the desired value.

2. Method according to claim 1, wherein the impression of the lower jaw (25) is an occlusal impression of at least one lower tooth, and the impression of the upper jaw (20) is an occlusal impression of at least one upper tooth.

3. Method according to claim 1 or 2, wherein the reference marking (5) has at least three position vectors which, when connected together, form a virtual plane.

4. Method according to any one of the preceding claims, wherein the reference marking (5) comprises at least three pins.

5. Method according to any one of the preceding claims, wherein the reference marking (5) is U-shaped.

6. Method according to any one of the preceding claims, wherein the reference marking (5) terminates flush with a side of the template (1) facing the opposite dental arch.

7. Method according to any one of the preceding claims, wherein the reference marking (5) is radiopaque (15).

8. Method according to any one of the preceding claims, wherein the imaging is based on a method selected from the group consisting of an X-ray method, nuclear spin tomography, cone-beam technique, computer tomography and digital volume tomography.

9. Method according to any one of the preceding claims, wherein the desired value and/or the actual value relate(s) to the jaw position, preferably the lower jaw position.

10. Method according to any one of the preceding claims, wherein a relative position of a mandibular condyle (40) and a mandibular fossa (45) of a temporal bone is analysed.

11. Method according to any one of the preceding claims, wherein the data from the analysis are transferred to the template (1) and the template (1) is used to produce the bite splint.

## Revendications

1. Procédé de fabrication d'une gouttière amovible destinée au positionnement d'un maxillaire inférieur (25), comprenant les étapes suivantes :
a) fourniture d'un gabarit (1) qui présente une empreinte d'un maxillaire inférieur (25) et une empreinte d'un maxillaire supérieur (20) d'un patient ;
b) fixation au gabarit (1) d'au moins un repère de référence (5) qui définit un plan de référence mécanique ;
c) positionnement du gabarit (1) dans l'espace buccal du patient de manière à obtenir une occlusion des maxillaires (20 ; 25) ;
d) représentation par imagerie des maxillaires (20 ; 25) et du repère de référence (5) avec le gabarit (1) positionné ;
e) détermination d'un plan de référence optique (30) par le biais du repère de référence (5) et détermination d'au moins une valeur réelle dans la représentation par imagerie ;
f) analyse d'une position de maxillaire à partir de la représentation par imagerie par le biais d'une comparaison de la valeur réelle avec au moins une valeur de consigne ; et
g) fabrication d'une gouttière amovible qui positionne le maxillaire inférieur (25) depuis une position de maxillaire selon la valeur réelle dans une position de maxillaire selon la valeur de consigne.

2. Procédé selon la revendication 1, l'empreinte du maxillaire inférieur (25) étant une empreinte occlusive d'au moins une dent de maxillaire inférieur, et l'empreinte du maxillaire supérieur (20) étant une empreinte occlusive d'au moins une dent de maxillaire supérieur.

3. Procédé selon la revendication 1 ou 2, le repère de référence (5) possédant au moins trois vecteurs de position qui, associés entre eux, forment un plan virtuel.

4. Procédé selon l'une des revendications précédentes, le repère de référence (5) comprenant au moins trois broches.

5. Procédé selon l'une des revendications précédentes, le repère de référence (5) présentant une forme en U.

6. Procédé selon l'une des revendications précédentes, le repère de référence (5) se terminant à fleur d'un côté du gabarit (1) qui est orienté vers l'arcade dentaire opposée.

7. Procédé selon l'une des revendications précédentes, le repère de référence (5) étant opaque aux rayons X (15).

8. Procédé selon l'une des revendications précédentes, la représentation par imagerie s'appuyant sur un procédé qui est sélectionné dans le groupe composé du procédé à rayons X, de l'imagerie par résonance magnétique, de la technique d'imagerie à faisceau conique tridimensionnel, de la tomographie assistée par ordinateur et de la tomographie volumique.

9. Procédé selon l'une des revendications précédentes, la valeur de consigne et/ou la valeur réelle se rapportant à la position du maxillaire, de préférence du maxillaire inférieur.

10. Procédé selon l'une des revendications précédentes, une position relative d'un condyle de mandibule (40) et d'une dépression d'articulation (45) d'un os temporal étant analysée.

11. Procédé selon l'une des revendications précédentes, les données issues de l'analyse étant reportées sur le gabarit (1) et le gabarit (1) étant utilisé dans la fabrication de la gouttière amovible.
